# EUROPÄISCHE PATENTSCHRIFT

(11) **EP 0 763 708 B1**
(45) Veröffentlichungstag und Bekanntmachung des Hinweises auf die Patenterteilung: **02.10.2002**
(21) Anmeldenummer: 96113300.6
(22) Anmeldetag: 20.08.1996
(51) Int. Cl.: G01B 5/008, G01B 21/04, B25J 9/16

(54) **Koordinatenmessmaschine**
Coordinate measuring machine
Machine de mesure de coordonnées

(30) Priorität: 18.09.1995 DE 19534535
(43) Veröffentlichungstag der Anmeldung: 19.03.1997
(73) Patentinhaber: Brown & Sharpe GmbH, 35578 Wetzlar (DE)
(72) Erfinder: Fugmann, Winfried, Dr., 35583 Wetzlar (DE)
(74) Vertreter: Knefel, Cordula, Dipl.-Phys.

(56) Entgegenhaltungen:
- EP-A- 0 109 201
- EP-A- 0 573 950
- WO-A-91/03145
- WO-A-95/14905
- WO-A-95/20747
- DE-C- 3 504 464
- US-A- 5 050 112
- US-A- 5 412 880

## Beschreibung

Die Erfindung betrifft eine Koordinatenmeßmaschine.

Zum Anfahren eines Meßpunktes, beispielsweise auf einem Werkstück, in den kartesischen Koordinatenrichtungen bestehen die sogenannten 3-D-Koordinatenmeßmaschinen aus einem Stativ, dem Tastsystem, einer vorzugsweise separat angeordneten Versorgungs- und Steuereinheit und einem Auswerterechner. Das Stativ hat die Aufgabe, das Tastsystem relativ zum Werkstück meßbar zu bewegen. Diese Aufgabe wird nach dem Stand der Technik durch drei senkrecht aufeinanderstehende Linearachsen gelöst, von denen entweder zwei bei Koordinatenmeßmaschinen mit bewegtem Meßtisch oder drei bei Koordinatenmeßmaschinen mit feststehendem Meßtisch meßtechnisch und konstruktiv aufeinander aufbauen.

Das Werkstück läßt sich aber auch, wie in der DE-OS 44 03 901 A1 beschrieben worden ist, mit einem Gerät antasten, das von einem Gelenkarm-Roboter abgeleitet ist.

Die bekannten Bewegungsmittel einer Koordinatenmeßmaschine nach der eingangs beschriebenen Art sind aufwendig. Denn jede Achse für die Verschiebung des Tastkopfes in einer Koordinatenrichtung enthält einen Antrieb, ein Maßstabsystem und eine Führung. Die Aufgabe der Führung ist es, Geradheits- und rotatorische Abweichungen bei Verschiebung des Tasters zu verhindern oder reproduzierbar und damit maschinenbedingt korrigierbar zu gestalten, und zwar mit einer sehr hohen Genauigkeit und unter allen zulässigen Temperatur- und Belastungsbedingungen. Beispielsweise muß bei einer Koordinatenmeßmaschine in Portalbauweise mit einer Meßlänge von einem Meter in allen drei Achsen die rotatorische Führungsgenauigkeit jeder Achse weit unter 0,5 Sekunden liegen, um eine Meßgenauigkeit im Bereich von 2 µm erreichen zu können. Aufgrund dieser Anforderungen liegt der größte Teil der Herstellungskosten einer Achse der Koordinatenmeßmaschine in der Führung und nicht im Antrieb oder dem Maßstabsystem.

Mit den verfügbaren Meßmitteln ist bei den bekannten Koordinatenmeßmaschinen die Aufnahme von rotatorischen Ablauffehlern nur bis zu einer Genauigkeit von etwa 0,3 Sekunden möglich. Andererseits können Positionsfehler bis zu einer Genauigkeit von etwa 0,5 µm gemessen werden. Bei einer Koordinatenmeßmaschine mit großem Meßvolumen wird daher die erreichbare geometrische Genauigkeit oft durch die Aufnahmegenauigkeit der rotatorischen Abweichungen begrenzt.

Bei den bekannten Koordinatenmeßmaschinen mit ruhendem Meßtisch bauen alle drei Achsen, das heißt die X-, Y- und Z-Achse bei der Verschiebung des Tastkopfes aufeinander auf, das heißt, alle Elemente der dritten Achse (Z-Achse) müssen von der zweiten Achse (Y-Achse) mitbewegt werden, und alle Elemente der zweiten Achse (Y-Achse) und der dritten Achse (Z-Achse) müssen von der ersten Achse (X-Achse) mitbewegt werden.

Bei Meßmaschinen mit bewegtem Meßtisch bauen nur zwei Achsen, nämlich die Y- und die Z-Achse, aufeinander auf, zusätzlich muß jedoch das Werkstück mit Hilfe des das Werkstück tragenden Tisches in der X-Achse bewegt werden.

In beiden Fällen sind bei den Koordinatenmeßmaschinen, welche den Tastkopf in den kartesischen Koordinatenrichtungen verschieben, große Massen zu bewegen, was eine Koordinatenmeßmaschine konventioneller Bauweise teuer und langsam macht.

Die drei linearen Achsen einer zum Stand der Technik gehörenden Koordinatenmeßmaschine ermöglichen es jedoch, mit einer relativ einfachen Steuerung eine zu sich selbst parallele Verschiebung des Tastkopfes zu erreichen. Soll, wie etwa bei optischer Antastung oder auch bei bestimmten mechanischen Meßaufgaben der Tastkopf gedreht werden, so ist eine Dreh-Schwenkeinrichtung erforderlich, die zusätzliche Ungenauigkeiten, Kosten- und Steuerungsaufwand verursacht, auch wenn oft nur ein geringer Schwenkbereich wirklich erforderlich ist.

Jede Linearachse einer Koordinatenmeßmaschine erfordert eine sorgfältige Paralleljustage von Führung, Antrieb und Maßstab sowie Hilfskonstruktionen, wie etwa einen Schutz der Führungsflächen gegen Verschmutzung, ferner reibungsarme Schlauch- und Kabelführungen.

Die Gelenkarm-Meßmaschinen nach der DE-OS 44 03 901 A1 haben keine Linearachsen und vermeiden damit einen Teil des vorgenannten prinzipbedingten Aufwandes. Jedoch bauen auch bei dieser Bauart alle Achsen aufeinander auf, was zu relativ großen zu bewegenden Massen führt, insbesondere wenn ein aufwendiger Tastkopf eingesetzt werden soll. Thermische oder durch Lastwechsel bedingte Verbiegungen der Arme wirken sich auf die Genauigkeit der Messung aus. Die Auflösung verfügbarer Drehgeber ist für eine Genauigkeit im µm-Bereich nicht ausreichend. Koordinatenmeßmaschinen in Gelenkarm-Bauart sind hinsichtlich ihrer Leistungsfähigkeit daher noch weit von den beschriebenen Koordinatenmeßmaschinen konventioneller Bauart entfernt.

Koordinatenmeßmaschinen müssen regelmäßig überprüft werden, um die Einhaltung der spezifizierten Genauigkeit nachzuweisen. Hierfür können kalibrierte Prüfkörper benutzt werden, beispielsweise Endmaße oder Kugelplatten. Es ist aber auch möglich, durch ein unabhängiges Meßsystem die Position des Tastkopfes zu überprüfen.

Um die Richtigkeit der Koordinaten des angetasteten Meßpunktes bestätigt zu erhalten, ist es aus der DD 141 061 bekannt, den Tastkopf in bekannter Weise koordinatenmäßig zu verschieben, mit dem Tastkopf jedoch zusätzlich, sozusagen zur Kontrolle, um feste Punkte neigbare Stangen vorzusehen, deren freie Enden mit dem Tastkopf allseitig drehbar verbunden sind, und die Stangen in ihrer Länge meßbar, verstellbar auszubilden. Wird der Tastkopf maschinell nach den vorgegebenen kartesischen Koordinaten verschoben, kann man durch Messung der Längen der ausziehbaren Stangen des Kontrollsystems prüfen, ob Meß- und/oder Verschiebefehler vorliegen, indem man aus den Längenänderungen der Stangen die Lage des angetasteten Meßpunktes ein zweites Mal berechnet und Einstellwert und Meßwert miteinander vergleicht. Bei dieser Ausbildung läßt sich nur vermuten, welcher der beiden Werte der richtige Wert ist, oder es kann ein Mittelwert aus den beiden Werten gebildet werden. Diese Ausbildung ist sehr aufwendig, da sie neben der Koordinatenmeßmaschine eine zusätzliche Meßeinrichtung als Kontrollsystem erfordert.

Ein entsprechendes Kontrollverfahren wird gemäß der DE 35 04 464 C1 für die Ermittlung der Positioniergenauigkeit einer Werkzeugaufnahme vorgenommen, bei der das Werkzeug durch einen Roboter verfahren wird. Dieses Kontrollgerät ist als transportables Gerät ausgebildet.

Aus der WO-A-91/03145 ist eine Werkzeugmaschine mit sechs Achsen bekannt, die eine untere Plattform und eine obere Plattform aufweist. Auf der unteren Plattform wird in dem von den Beinen begrenzten Raum das Werkstück angeordnet. Die obere Plattform trägt ein Werkzeug, beispielsweise ein spanabhebendes werkzeug oder einem Tastkopf.

Die beiden Plattformen sind mit sechs beweglichen und in ihrer Länge verstellbaren Beinen miteinander verbunden.

Diese zum Stand der Technik gehörende Werkzeugmaschine hat den Nachteil, dass das Werkstück in dem von den Beinen begrenzten Raum angeordnet ist. Hierdurch können lediglich Werkstücke mit begrenzter räumlicher Ausdehnung in dieser zum Stand der Technik gehörenden Werkzeugmaschine bearbeitet werden. Die Werkstücke können nicht größer als der von den Beinen und den beiden Plattformen begrenzte Raum sein.

Baubedingt durch den begrenzten Raum zwischen den Plattformen und den Beinen ist das Werkzeug in kurzem Abstand zu der oberen Plattform angeordnet, um einen möglichst großen Arbeitsraum zu erhalten.

WO-A-91/14905 beschreibt ein Positionsmeßgerät, welches wie die oben genannte Werkzeugmaschine (WO-A-91/03145) sechs Achsen aufweist, die eine untere Plattform mit einer oberen Plattform verbinden.

Gemäß der WO-A-95/14905 wird das zu vermessende Werkstück zwischen den Beinen des Positionsmeßgerätes angeordnet und mit einem Taster vermessen. Gemäß einem Ausführungsbeispiel dieses Standes der Technik ist das Werkstück zwar nicht zwischen den Beinen angeordnet, jedoch nach wie vor innerhalb einer Rahmen und Trägerkonstruktion des Positionsmeßgerätes (Fig. 11). Die Anordnung des Werkstückes innerhalb des von den Beinen gebildeten Raumes und/oder innerhalb der Träger und Rahmenkonstruktion des Koordinatenmeßgerätes hat den schon genannten Nachteil, daß der Raum für die Aufnahme des Werkstückes eine begrenzte räumliche Ausdehnung aufweist, so dass Werkstücke lediglich bis zu einer Maximalgröße in diesem zum Stand der Technik gehörenden Positionsmeßgerät vermessen werden können. Darüber hinaus ist eine freie und ungehinderte manuelle oder automatische Beschickung des Koordinatenmeßgerätes gemäß diesem Stand der Technik nicht möglich.

Das der Erfindung zugrunde liegende technische Problem besteht darin, eine Koordinatenmeßmaschine anzugeben, welche von ihrem Grundaufbau einfach und preiswert herstellbar ist, darüber hinaus jedoch die gewünschte Meßgenauigkeit und -geschwindigkeit gewährleistet und insbesondere auch schwierig erreichbare Meßpunkte leicht antasten läßt.

Diese Aufgabe wird durch das kennzeichnende Merkmal des Anspruches 1 gelöst.

Dadurch, daß das aus der DD 141 061 an sich bekannte Prinzip der Kontrollmessung erfindungsgemäß dazu verwendet wird, den Tastkopf zu tragen und meßgenau zu bewegen, kann, wie gefunden wurde, die bisherige, aus den genannten Gründen aufwendige Standard-Koordinatenmeßmaschine des Tastkopfes vollkommen entfallen, insbesondere da der Tastkopf gewichtsmäßig relativ leicht ist und deshalb zu seiner exakten Verschiebung nicht des massigen Aufbaus der bisherigen Koordinatenmeßmaschine bedarf.

Dadurch, daß jetzt der Tastkopf von einem Körper getragen wird, der als gewichtsmäßig relativ leichtes Rahmengestell ausgebildet sein kann, und vorteilhaft wenigstens ein Punkt des Körpers mittels in der Länge und/oder den Winkeln verstellbarer Beine in vorgegebenen Fixpunkten mit der das Werkstück tragenden Grundplatte gelenkig verbunden ist, ist es möglich, den vom Körper getragenen Tastkopf im Meßbereich der Koordinatenmeßmaschine beispielsweise allein durch Veränderung der Länge der Beine an jeden beliebigen Ort zu fahren. Aus der gemessenen Länge der Beine kann ein Rechner leicht die Position der Tastspitze des Tastkopfes ermitteln und in kartesischen Koordinaten angeben.

Ein starrer Körper im Raum besitzt sechs Freiheitsgrade, nämlich drei translatorische und drei rotatorische Freiheitsgrade. Um die Lage des Tastkopfes eindeutig festzulegen, sind daher sechs einschränkende Bedingungen notwendig.

Deshalb hat es sich als vorteilhaft erwiesen, sechs Beine vorzusehen, von denen jedoch nicht alle in ihrer Länge verstellbar sein müssen. Mindestens drei der Beine müssen aber gelenkig und längenverstellbar sein.

Die Beine brauchen im Ausgangszustand nicht gleiche Länge aufzuweisen. Vorteilhaft wird man die Beine jedoch in gleicher Bauart ausbilden, um diese in Serienfertigung herstellen zu können.

Sechs Beine lassen sich in bekannter Weise in einer Hexapoden-Bauart anordnen.

Regelmäßige Hexapoden-Bauarten sind grundsätzlich aus den Veröffentlichungen der Zeitschrift "Spektrum der Wissenschaft" vom Mai 1991, Seiten 18 bis 22 sowie aus der Zeitschrift "Schweizer Maschinenmarkt", Nr. 17/1995, Seiten 26 bis 29 bekannt. Bei derartigen auf einer Grundplatte und einer starren Gehäusekonstruktion in Leichtbauweise aufbauenden Körpern geht man davon aus, daß ein Dreieck und die darauf basierenden Körper, zum Beispiel Tetraeder, Oktaeder oder Ikosaeder, dann, wenn sie nur an den Ecken belastet werden, die größte Steifigkeit aufweisen. Demgemäß weist die in der Zeitschrift "Spektrum der Wissenschaft" vom Mai 1991 vorgesehene Hexapoden-Bauart sechs regelmäßig angeordnete Beine auf, welche dazu dienen, den Hauptspiegel eines Spiegelteleskopes für astronomische Zwecke zu tragen und der Erddrehung nachzuführen. Dieser geplante Spiegel soll wenigstens einen Durchmesser von 12 m aufweisen und ist deshalb gewichtsmäßig sehr schwer. Die für seine Lagerung vorgesehene Hexapoden-Bauart ist deshalb einzig und allein darauf ausgelegt, einen gewichtsmäßig schweren Gegenstand zu tragen und nachzuführen.

Dasselbe gilt für die im Maschinenbau angestrebte Technik, die Hexapoden-Bauart bei einer Werkzeugmaschine vorzusehen. Auch hier soll die Hexapoden-Bauart gestatten, große Kräfte auszuüben.

Gemäß der Erfindung wird von den Beinen nur ein relativ leichtes Rahmengestell getragen, das seinerseits den Tastkopf trägt. Bei der erfindungsgemäßen Verstellung des Tastkopfes und des mit diesem verbundenen Tasters kommt es deshalb nur darauf an, mit einfachen Mitteln den Taster des Tastkopfes so zu bewegen, daß er mit µm-Genauigkeit auf den Meßpunkt des Werkstückes gefahren wird.

Als weiterhin vorteilhaft hat es sich erwiesen, den Tastkopf an einem Ausleger des mit Hilfe der Stangenkonstruktion beweglichen Körpers anzuordnen.

Typische Werkstücke von Koordinatenmeßmaschinen sind oft etwa quaderförmig, wobei an mehreren ihrer sechs Seiten spezielle Strukturen, wie etwa Bohrungen, eingelassen sind, deren geometrische Merkmale von der Meßmaschine zu bestimmen sind. Dabei ist es stets das Bestreben, mit möglichst kurzen Tastern zu arbeiten, da lange Taststiftkombinationen unhandlich sind, bei vielen Tastköpfen aufgrund des Gewichtes nicht verwendet werden können und zu Genauigkeitseinbußen und Einschränkungen der Verfahrgeschwindigkeit führen.

Deshalb ist bei Koordinatenmeßmaschinen kartesischer Bauart die "oberste" der Achsen in der kinematischen Kette als verschiebbarer Ausleger, in der Regel mit mitbewegten Führungselementen ausgeführt (Pinole). Dieser Ausleger muß einschließlich aufbauender Zusatzkonstruktionen, wie etwa Führung, Maßstab oder Kollisionsschutz, einen möglichst geringen Querschnitt haben, da dieser beim Antasten von Merkmalen an den Seitenflächen des Werkstückquaders in die Tasterlänge eingeht. Bei dieser Bauweise ergibt sich außerdem häufig das Problem, daß der Maßstab konstruktionsbedingt etwa aus Platzgründen auf der Pinole angebracht werden muß und dann in ausgefahrener Stellung der Pinole freiliegt und ungeschützt Verschmutzungen und thermischen Störungen ausgesetzt ist.

Bei einer Koordinatenmeßmaschine in der erfindungsgemäßen Bauart ist aus den genannten Gründen die Anbringung des Tastkopfes direkt an dem von den Beinen getragenen Rahmengestell nicht erwünscht. Es ist daher der Tastkopf am Ende eines mit dem Rahmengestell starr verbundenen Auslegers angebracht. Dieser Ausleger hat, im Gegensatz zur konventionellen Bauart, keine Führungsfunktion und kann daher mit einem für die Steifigkeit und für die Verwendbarkeit kurzer Taster optimierten, eventuell sich verjüngenden Querschnitt konstruiert werden. Der Ausleger trägt bei der erfindungsgemäßen Bauart auch keinen Maßstab oder andere empfindliche Teile, die vor Verschmutzung geschützt werden müssen. Der Ausleger sollte gegen thermische Störungen unempfindlich sein.

Ein weiterer Vorteil der erfindungsgemäßen Ausbildung ist, daß die Grundplatten, die Beine und der den Tastkopf tragende Körper in einem Gehäuse anordbar sind, aus dem der den Meßkopf tragende Ausleger herausragt. Hierdurch wird eine weitestgehende Abschirmung der die Bewegung auslösenden und registrierenden Elemente (Beine) und ihrer Lager gegen Verschmutzung und äußere thermische Einflüsse erreicht.

Ein weiterer Vorteil der erfindungsgemäßen Ausbildung ist, daß die Aufnahme für das auszumessende Werkstück außerhalb des von den Beinen beanspruchten Raumes angeordnet sein kann, so daß eine ungehinderte manuelle oder automatische Beschickung des Koordinatenmeßgerätes möglich ist. Der Bediener kann dann auch, wie es etwa beim Erstellen eines neuen Meßlaufes notwendig ist, aus kurzer Entfernung den Antastpunkt beobachten; wäre der Tastkopf, wie aus der Zeitschrift "Schweizer Maschinenmarkt", Nr. 17/1995, Seiten 26 bis 29 für den Werkzeugkopf bekannt, innerhalb des von den Beinen umschlossenen Raumes angeordnet, so wäre dies aus Zugänglichkeits- und Sicherheitsgründen ausgeschlossen. Die an Werkzeugmaschinen gestellte Forderung nach der Aufnahme großer Kräfte, wobei ein Ausleger von Nachteil wäre, besteht bei Koordinatenmeßgeräten nicht, da die beim Antasten ausgeübten Kräfte klein und darüber hinaus meßbar und damit korrigierbar sind.

Die erfindungsgemäße Ausbildung erlaubt es auch, die Aufnahme für das auszumessende Werkstück auf einfache Weise, beispielsweise durch Lösen einer Schraubverbindung, von der Grundplatte zu trennen und wechselbar zu gestalten. Damit kann ein ortsfest aufgestelltes Koordinatenmeßgerät mit verschiedenen Werkstückaufnahmen ausgestattet werden oder ein für häufige Ortswechsel ausgelegtes Koordinatenmeßgerät, beispielsweise ortsfeste Werkstückaufnahmen angeschlossen werden.

Der Tisch für die Aufnahme des Werkstückes kann auch als Drehtisch ausgebildet sein, oder es kann ein derartiger Drehtisch auf der Grundplatte vorgesehen sein. Der Drehtisch kann hierbei kontinuierlich um eine vertikal auf der Grundplatte stehende Achse drehbar sein oder aber auch in Intervallen.

Weitere Einzelheiten der Erfindung können den obhängigen Ansprüchen entnommen werden.

Auf der Zeichnung ist ein Ausführungsbeispiel der Erfindung dargestellt, und zwar zeigen:
- Fig. 1: eine schematische Darstellung zur Erläuterung der Wirkungsweise;
- Fig. 2: eine schematische Darstellung der Koordinatenmeßmaschine;
- Fig. 3: eine Einzelheit der Fig. 1;
- Fig. 4: eine geänderte Ausbildung nach Fig. 2.

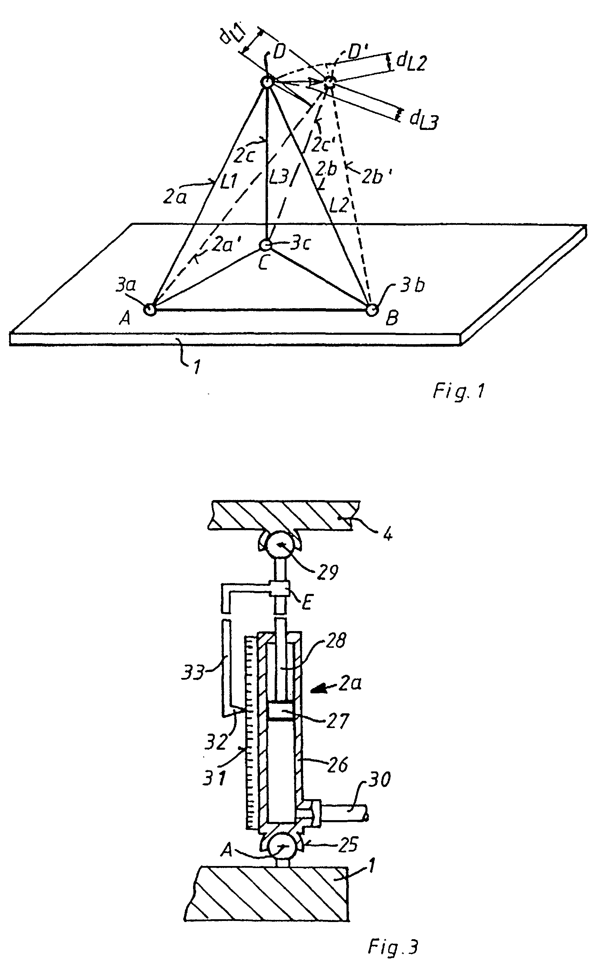

Gemäß Fig. 1 sind auf einer Grundplatte (1) in den Punkten (A, B, C) Kugelgelenke (3a, 3b und 3c) vorgesehen, in denen Beine (2a, 2b und 2c) allseitig drehbar gelagert sind. Die Beine (2a, 2b, 2c) laufen in einem Punkt (D) zusammen oder in seiner unmittelbaren Nähe. Sie sind jeweils gelenkig im Bereich des Punktes (D) miteinander verbunden. Die Beine (2a, 2b, 2c) weisen die Längen L₁, L₂ und L₃ auf.

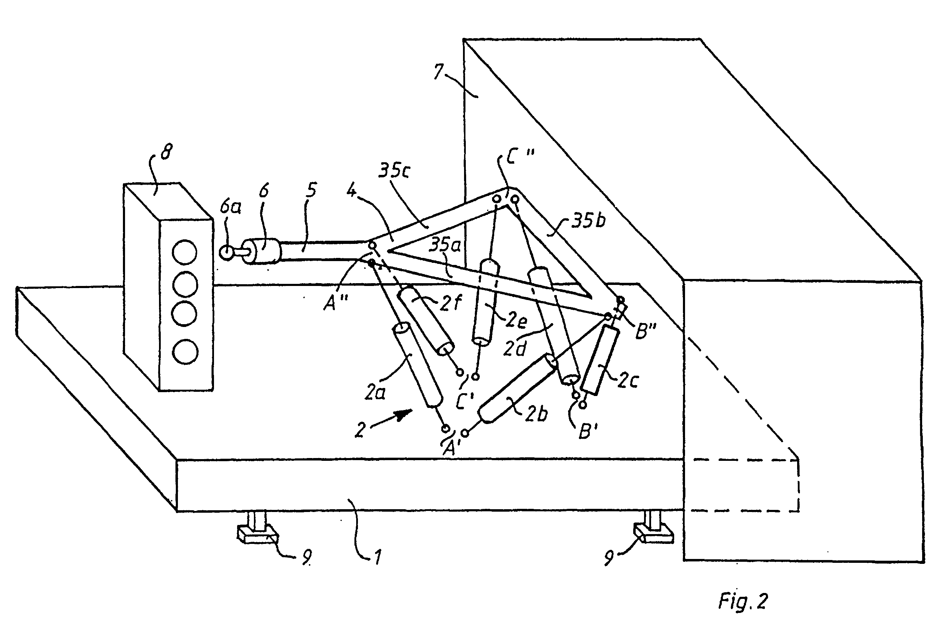

Wird der Punkt (D), welcher den Tastkopf (6) der Fig. 2 tragen kann, nach (D') verschoben, wandert das Bein (2a) in die Lage (2a'), das Bein (2b) in die Lage (2b') und das Bein (2c) in die Lage (2c'). Damit diese Lageänderung des Punktes (D) nach (D') möglich ist, müssen sich die Längen der Beine (2a, 2b, 2c) ändern. Die Länge L₁ des Beines (2a) ändert sich um den Betrag dL₁, die Länge des Beines (2b) ändert sich um den Betrag dL₂ und die Länge des Beines (2c) ändert sich um den Betrag dL₃.

Diese Längenänderungen der Beine (2a, 2b, 2c) können, wie noch zu zeigen sein wird, bewußt erzeugt werden, um den im Punkt (D) angelenkten Tastkopf (6) nach (D') zu verlagern.

Eine solche Verlagerung kann aber auch grundsätzlich von Hand oder durch andersartige Mittel durchgeführt werden.

In jedem Fall ist es erforderlich, die Längenänderung der Beine (2a, 2b, 2c) zu erfassen.

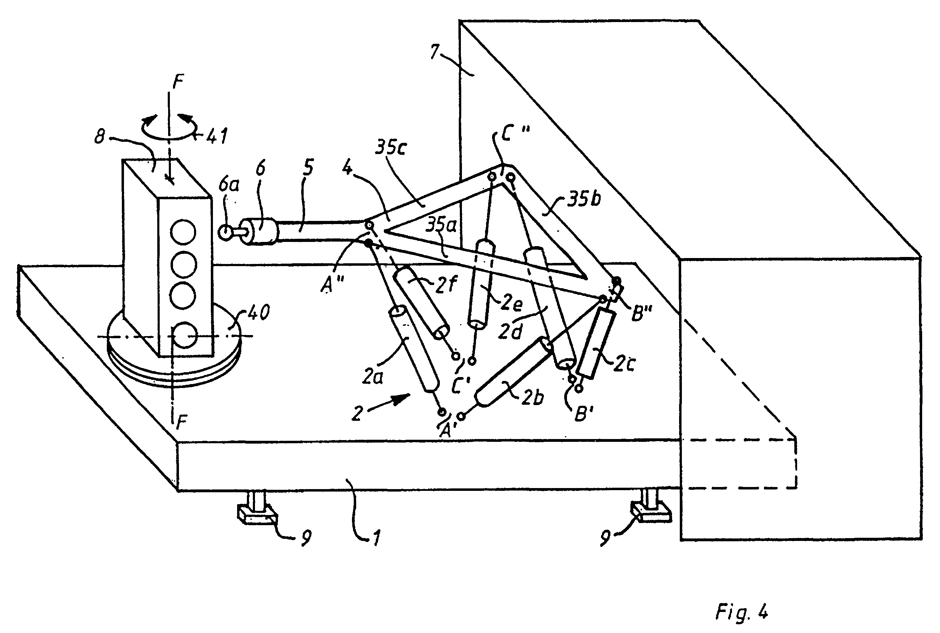

Die bei der Verlagerung des Punktes (D) nach (D') erfolgenden Winkeländerungen der Beine in den Anlenkpunkten (A, B, C) auf der Grundplatte (1) oder im Punkt (D) eines Körpers (4) (Fig. 3) sind hierbei dann ohne Bedeutung, wenn die Längenänderungen dL₁, dL₂, dL₃ meßbar sind, da die Lage eines jeden Punktes im Raum durch drei Koordinaten bestimmt wird, hier also durch die Längen der Beine (2a, 2b, 2c) in ihrer Ausgangslage in den Punkten (A, B und C) auf der Grundplatte (1) und bei Verlagerung des Punktes (D) nach (D').

Anstelle der Längenänderungen können aber auch Winkeländerungen der Beine zur Grundplatte für die Bestimmung der Lageänderung des Punktes (D) nach (D') verwendet werden.

Gemäß Fig. 3 sind die Beine, wie für das Bein (2a) gezeigt, ausfahrbar ausgebildet. Auf der Grundplatte (1) ist im Punkt (A) mittels eines Kugelgelenks (25) das Bein (2a) allseitig schwenkbar gelagert. Das Bein besteht aus einem zylinderförmigen Teil (26), in dem ein Kolben (27) verschiebbar gelagert ist. Der Kolben (27) trägt eine Kolbenstange (28). Die Kolbenstange (28) ist mittels eines Kugelgelenks (29) an dem noch zu beschreibenden Körper (4) der Fig. 2 befestigt. Der Körper (4) kann, so wie es für den Punkt (D) in Fig. 1 gezeigt wurde, in den drei kartesischen Koordinatenrichtungen verschoben werden. Das Bein (2a) ändert hierbei seine Winkelneigung zur Grundplatte (1) und auch zum Körper (4) (Fig. 1), außerdem aber auch seine Länge L₁ mit Bezug auf die Mittelpunkte der Kugeln (25 und 29) der Kugelgelenke in den Punkten (A und D).

Beispielsweise mit Hilfe eines Hydraulikmittels, welches über die Leitung (30) in den zylinderförmigen Teil (26) gedrückt wird, kann die Längenänderung des Beines (2a) gesteuert werden und damit die Verlagerung des Körpers (4).

Eine Lagerung und Steuerung des Beines (2a), wie in Fig. 3 beschrieben, ist für jedes der drei Beine (2a, 2b und 2c) der Fig. 1 vorgesehen.

Um die Größe der Längenänderung des Beines (2a) aus einer Normalstellung heraus zu erfassen, trägt der zylinderförmige Teil (26) einen Maßstab (31). Auf dem Maßstab (31) kann mittels eines Ableseindex (32), welcher über eine Stange (33) mit der Kolbenstange (28) im Punkt (E) verbunden ist, die Längenänderung des Beines (2a) abgelesen werden. Die Ausfahrgröße der Kolbenstange (28) und damit die Längenänderung dL₁ des Beines (2a) entspricht der Verschiebungsgröße des Kolbens (27) und damit der Kolbenstange (28) des Körpers (4) im Anlenkpunkt des Kugelgelenks (29).

Die in Fig. 3 schematisch dargestellte Erfassung der Längenänderung dL₁ kann mit modernen Mitteln sensorisch erfolgen und beispielsweise als Wert in eine nicht dargestellte Meß- und Steuereinrichtung eingegeben werden.

Für jedes der drei Beine (2a, 2b, 2c) ist in der Fig. 1 eine entsprechende Einrichtung vorgesehen.

Aus den gemessenen Längenänderungen der Beine (2a, 2b, 2c) kann damit die Lage des Punktes (D) rechnerisch ermittelt werden oder umgekehrt durch Steuerungsmittel, welche die Kolben (26) geeignet verschieben, ein bestimmter Punkt, in Fig. 1 zum Beispiel der Punkt (D'), angefahren werden.

Fig. 2 zeigt ein Ausführungsbeispiel der Koordinatenmeßmaschine, bei dem auf der Grundplatte (1) sechs Beine (2a, 2b, 2c, 2d, 2e, 2f) vorgesehen sind. Je zwei Beine sind in dem Bereich der Punkte (A', B', C') auf der Grundplatte (1) in benachbarten Kugelgelenken, wie in Fig. 3 für das Bein (2a) dargestellt, angeordnet. Die Lager je zweier Beine liegen dicht beieinander, was jedoch nicht zwingend ist. Von jedem Punktbereich (A', B', C') geht damit ein Beinpaar (2a, 2b; 2c, 2d; 2e, 2f) aus. Eines der Beine jeden Paares ist zu einem Eckbereich (A") des Körpers (4) geführt, das andere Bein (2b) des Paares zum Eckbereich (B") des Körpers (4). Die im Bereich (B') gelagerten Beine (2c und 2d) sind derart angeordnet, daß das Bein (2c) im Bereich des Punktes (B") mit dem Körper (4) verbunden ist und das Bein (2d) im Bereich des Punktes (C") mit diesem Körper.

Eine entsprechende Anordnung ist für das Beinpaar (2e, 2f) getroffen, indem eines der Beine, nämlich das Bein (2e), mit dem Körper (4) im Bereich des Punktes (C") verbunden ist und das andere Bein (2f) mit dem Körper (4) im Bereich des Punktes (A").

Der Körper (4) bildet ein aus Stangen (35a, 35b und 35c) bestehendes dreieckförmiges Rahmengestell. Die Stangen (35a, 35b, 35c) sind fest miteinander verbunden. Sie tragen einen Ausleger (5), an dem der Tastkopf (6) befestigt ist. Durch Änderung der Länge der Beine (2a bis 2f) kann ein auf der Grundplatte (1) angeordnetes Werkstück (8) in einem Meßpunkt angetastet werden.

Die Längenänderungen dL der Beine (2a bis 2f) werden rechnerisch erfaßt und in die Lage (X, Y, Z) der Tastspitze (6a) umgerechnet sowie zur Steuerung der Bewegung des Körpers (4) und des Tastkopfes (6) verwendet.

Bei der beschriebenen Ausbildung kommt es im wesentlichen darauf an, daß die Anlenkpunkte der Beine auf der Grundplatte und dem Körper (4) einen konstanten Abstand voneinander aufweisen und stets beibehalten, das heißt, daß sich die Mittelpunkte der Kugeln der Kugelgelenke nicht gegeneinander verschieben. Ferner kommt es darauf an, daß sich die Länge der Beine (2a bis 2f) nicht unkontrollierbar ändert, weil dann ein angeschlossener Rechner eine Fehllage des Punktes (D) und damit der Tastspitze (6a) ermittelt. Die Grundplatte (1) besteht deshalb aus einem thermisch unempfindlichen Material und weist eine Stärke auf, daß Verbiegungen und Längenausdehnungen der Grundplatte (1) ausgeschlossen sind.

Grundsätzlich können aber auch Meßeinrichtungen vorgesehen sein, welche ständig die Lage der Anlenkpunkte der Beine an der Grundplatte (1) im Bereich der Punkte (A', B' und C') kontrollieren und eventuelle Lageabweichungen derart umrechnen, daß an den Meßwerten Korrekturen angebracht werden können. Das gleiche gilt für die in den Bereichen (A", B", C") auf dem Körper (4) angelenkten Beine.

Damit die Bewegungseinrichtung für den Taster, bestehend aus den Beinen (2a bis 2f) und dem Körper (4), nicht verschmutzt und auch gegen thermische Einflüsse weitgehend abgeschirmt ist, kann über dieser Bewegungseinrichtung ein Gehäuse (7) angeordnet sein.

Für Transportzwecke kann die Grundplatte (1) aus mehreren Teilen bestehen, die dann jedoch am Meßort wieder zusammenzusetzen sind (nicht dargestellt).

Um keine ungewollten Längenänderungen der Beine (2) durch Erschütterungen oder dergleichen zu bewirken, ist die Grundplatte (1) gemäß Fig. 2 auf Dämpfungselementen (9), beispielsweise hydraulisch arbeitenden Stoßdämpfern, angeordnet.

Die Steuerung (nicht dargestellt in Fig. 2) rechnet die Längenänderung der Beine in die vom Bediener gewünschten Koordinaten um und ermöglicht damit eine Bewegung des Tastkopfes entlang kartesischer Koordinatenachsen bei Auslenkung eines Steuerhebels. Der Anschluß an den Auswerterechner erfolgt wie bei konventionellen Koordinatenmeßmaschinen.

Die erreichbare Genauigkeit kann durch eine rechnerische Korrektur der geometrischen Abweichungen gesteigert werden.

Anstelle einer Längenänderung der Beine oder eines der Beine kann aber auch die Ermittlung der Änderung der Winkellage wenigstens eines Beines treten (nicht dargestellt).

Gemäß Fig. 4 ist das auszumessende Werkstück (8) auf einem von der Grundplatte (1) getragenen Drehtisch (40) angeordnet, der um die Achse (F-F) in Richtung des Pfeiles (41) drehbar ist.

### Bezugszahlen

- 1: Grundplatte
- 1a: Platte
- 2: Beine
- 2a, 2b, 2c,: längenverstellbare Beine
- 2a', 2b', 2c': geänderte Lagen der Beine (2a, 2b, 2c)
- 2d, 2e, 2f: längenverstellbare Beine
- 3a, 3b, 3c: Kugelgelenke
- 4: Körper
- 5: Ausleger
- 6: Tastkopf
- 6a: Tastspitze
- 7: Gehäuse
- 8: Werkstück
- 9: Dämpfungselemente

- 25: Kugelgelenke
- 26: zylinderförmiger Teil
- 27: Kolben
- 28: Kolbenstange
- 29: Kugelgelenke
- 30: Leitung
- 31: Maßstab
- 32: Ableseindex
- 33: Stange
- 35a, 35b, 35c: Stangen

- 40: Drehtisch
- 41: Pfeil
- L₁, L₂, L₃: Ausgangslängen der Beine (2a, 2b 2c)
- dL₁, dL₂, dL₃: Längenänderungen der Beine (2a, 2b, 2c)
- A, B, C: Anlenkpunkte
- A', B', C': Anlenkbereiche der Beine auf der Grundplatte (1)
- A", B", C": Anlenkbereiche der Beine am Körper (4)
- D: Verbindungsstelle der Beine (2a, 2b, 2c)
- D': verlagerter Punkt (D)
- E: Verbindungspunkt
- F-F: Drehachse

## Patentansprüche

1. Koordinatenmeßmaschine mit einer Aufnahme für ein auszumessendes Werkstück (8),
einem zur Antastung des Werkstücks (8) bewegbaren Tastkopf (6), der an einem Ausleger (5) eines im wesentlichen starren Körpers (4) fest, auswechselbar fest oder beweglich angeordnet ist,
einem Positioniermechanismus (2) für den Tastkopf (6) zur Positionierung des Tastkopfes (6) relativ zur Werkstückaufnahme
sowie einer Versorgungs-, Steuer- und Auswerteeinrichtung, wobei der Positioniermechanismus (2) aus wenigstens drei, an einer Grundplatte (1) an wenigstens drei fest vorgesehenen Punkten (A, B, C) allseitig schwenkbar gelagerten Beinen (2a, 2b, 2c, 2d, 2e, 2f) besteht, deren Länge und/oder Neigung zur Grundplatte (1) messbar verstellbar sind und die mit ihren anderen Enden allseitig schwenkbar an dem den Tastkopf (6) tragenden Körper (4) befestigt sind,
**dadurch gekennzeichnet, daß** die Aufnahme für das auszumessende Werkstück (8) außerhalb des von den Beinen (2a, 2b, 2c, 2d, 2e, 2f) beanspruchten Raumes auf der Grundplatte (1) angeordnet ist.

2. Koordinatenmeßmaschine nach Anspruch 1, **dadurch gekennzeichnet, daß** der Positioniermechanismus zugleich als Meßeinrichtung dient.

3. Koordinatenmeßmaschine nach Anspruch 1, **dadurch gekennzeichnet, daß** der Positioniermechanismus wenigstens sechs in ihrer Länge verstellbare, den Körper (4) tragende Beine (2a bis 2f) aufweist.

4. Koordinatenmeßmaschine nach Anspruch 3, **dadurch gekennzeichnet, daß** drei Beinpaare (2a, 2b; 2c, 2d; 2e, 2f) auf der Grundplatte (1) angelenkt sind, derart, daß die Anlenkpunkte jedes Beinpaares (2a, 2b; 2c, 2d; 2e, 2f) in benachbarten Bereichen (A', B', C') auf der Grundplatte liegen und am verschiebbaren, den Tastkopf (6) tragenden Körper (4) in Bereichen (A", B", C") der Drehpunkt eines Beines eines jeden Paares benachbart zu dem Drehpunkt eines Beines eines Nachbarpaares angeordnet ist.

5. Koordinatenmeßmaschine nach Anspruch 1, **dadurch gekennzeichnet, daß** der von den Beinen (2a bis 2f) getragene Körper (4) aus einem Rahmengestell (35a, 35b, 35c) besteht.

6. Koordinatenmeßmaschine nach Anspruch 5, **dadurch gekennzeichnet, daß** das Rahmengestell (35a, 35b, 35c) dreieckförmig ausgebildet ist und die Drehpunktbereiche (A", B", C") der Beine in den Eckpunkten des Rahmengestelles gelagert sind.

7. Koordinatenmeßmaschine nach Anspruch 6, **dadurch gekennzeichnet, daß** der Ausleger (5) an einer Ecke des Rahmengestelles (35a, 35b, 35c) vorgesehen ist.

8. Koordinatenmeßmaschine nach Anspruch 7, **dadurch gekennzeichnet, daß** der Ausleger (5) vom Rahmengestell (35a, 35b, 35c) wegweist.

9. Koordinatenmeßmaschine nach Anspruch 1, **dadurch gekennzeichnet, daß** die Grundplatte (1) mit der Werkstückaufnahme identisch ist.

10. Koordinatenmeßmaschine nach Anspruch 9, **dadurch gekennzeichnet, daß** die Grundplatte (1) mehrteilig ausgebildet ist.

11. Koordinatenmeßmaschine nach Anspruch 1, **dadurch gekennzeichnet, daß** die Grundplatte (1) auf Dämpfungselementen (9) angeordnet ist.

12. Koordinatenmeßmaschine nach Anspruch 1, **dadurch gekennzeichnet, daß** die Grundplatte (1) in sich steif und gegen thermische Einflüsse unempfindlich ausgebildet ist.

13. Koordinatenmeßmaschine nach Anspruch 1, **dadurch gekennzeichnet, daß** die Koordinatenmeßmaschine Sensoren aufweist, welche die Lage der Anlenkpunkte (A', B', C') der Beine auf der Grundplatte (1) erfassen und Lageänderungen dieser Anlenkpunkte der Meß- und Steuereinrichtung mitteilen.

14. Koordinatenmeßmaschine nach Anspruch 1, **dadurch gekennzeichnet, daß** die Anlenkungsmittel der Beine (2a bis 2f) auf der Grundplatte (1) und am Körper (4) aus reibungsarmen, spielfreien Kugelgelenken bestehen.

15. Koordinatenmeßmaschine nach Anspruch 14, **dadurch gekennzeichnet, daß** die Kugelgelenke als Luftlager, hydraulische Lager, Gleit- oder Wälzlager oder dergleichen ausgebildet sind.

16. Koordinatenmeßmaschine nach Anspruch 1, **dadurch gekennzeichnet, daß** die Anlenkungsmittel der Beine (2a bis 2f) durch Biegeelemente gebildet sind.

17. Koordinatenmeßmaschine nach Anspruch 1, **dadurch gekennzeichnet, daß** die Anlenkungsmittel sowohl aus Luftlagern, hydraulischen Lagern, Gleit- oder Wälzlagern oder dergleichen bestehen, als auch aus Biegeelementen.

18. Koordinatenmeßmaschine nach Anspruch 1, **dadurch gekennzeichnet, daß** die Grundplatte (1), die Beine (2a bis 2f) und der den Tastkopf (6) tragende Körper (4) in einem Gehäuse (7) angeordnet sind, aus dem der den Meßkopf (6) tragende Ausleger (5) herausragt.

19. Koordinatenmeßmaschine nach Anspruch 1, **dadurch gekennzeichnet, daß** die Beine (2a bis 2f) baugleich sind.

20. Koordinatenmeßmaschine nach Anspruch 1, **dadurch gekennzeichnet, daß** die Länge der Beine (2a bis 2f) hydraulisch, pneumatisch oder elektromotorisch mit Hilfe einer Spindel, eines Linearmotors oder dergleichen längenverstellbar ist.

21. Koordinatenmeßmaschine nach Anspruch 1, **dadurch gekennzeichnet, daß** jedes längenverstellbare Bein ein Maßstabsystem (31, 32) trägt, auf dem die Länge des Beines bezogen auf die Anlenkpunkte an der Grundplatte (1) und am Körper (4) ablesbar oder abtastbar ist.

22. Koordinatenmeßmaschine nach Anspruch 1, **dadurch gekennzeichnet, daß** die Beine (2a bis 2f) die Ausfahrlänge erfassende Sensoren tragen.

23. Koordinatenmeßmaschine nach Anspruch 1, **dadurch gekennzeichnet, daß** an den Anlenkpunkten der Beine (2a bis 2f) an der Grundplatte (1) und/oder am Körper (4) Winkelmeßsysteme vorgesehen sind, die die Neigungswinkel der Beine (2a bis 2f) relativ zu der Grundplatte (1) oder dem Körper (4) erfassen.

24. Koordinatenmeßmaschine nach Anspruch 1, **dadurch gekennzeichnet, daß** die Beine (2a bis 2f) Belastungs- und/oder Temperatursensoren tragen.

25. Koordinatenmeßmaschine nach Anspruch 1, **dadurch gekennzeichnet, daß** für die Erfassung der Lage des den Tastkopf (6) tragenden Körpers (4) oder des Tastkopfes selbst ein zusätzliches von den Beinen unabhängiges Meßsystem vorgesehen ist.

26. Koordinatenmeßmaschine nach Anspruch 1, **dadurch gekennzeichnet, daß** wenigstens ein Bein in seinem Ausgangszustand eine andere Länge als die übrigen Beine aufweist.

27. Koordinatenmeßmaschine nach Anspruch 1, **dadurch gekennzeichnet, daß** wenigstens eines der Beine (2a bis 2f) eine unveränderbare vorgegebene Länge und/oder Lage aufweist.

28. Koordinatenmeßmaschine nach Anspruch 1, **dadurch gekennzeichnet, daß** die Anlenkpunkte der Kugelgelenke auf der Grundplatte (1) versetzbar ausgebildet sind.

29. Koordinatenmeßmaschine nach Anspruch 1, **dadurch gekennzeichnet, daß** die Grundplatte (1) aus mehreren, zueinander in einem Winkel stehenden, starr miteinander verbundenen Teilen besteht, und daß jedes der Teile wenigsten eines der Beine (2a bis 2f) trägt.

30. Koordinatenmeßmaschine nach Anspruch 1, **dadurch gekennzeichnet, daß** die Beine (2a bis 2f) paarweise so angeordnet sind, daß ihre Richtungen in einem ausgezeichneten Teil des Meßvolumens nahezu ein Orthogonalsystem bilden.

31. Koordinatenmeßmaschine nach Anspruch 1, **dadurch gekennzeichnet, daß** zur Steigerung der Meßgenauigkeit eine in der Steuereinrichtung ausgeführte rechnerische Korrektur der Längenmessung der Beine (2a bis 2f) und gegebenenfalls weiterer geometrischer Abweichungen der Meßwerte überlagerbar ist, und daß die Ermittlung der Größe der einzelnen Korrekturen der Abweichungen an den einzelnen Elementen, wie Beinen (2a bis 2f) und/oder Ausleger (5) im Meßbetrieb an einem speziellen Werkstück erfolgt.

32. Koordinatenmeßmaschine nach Anspruch 1, **dadurch gekennzeichnet, daß** die Aufnahme für das auszumessende Werkstück als Drehtisch (40) ausgebildet ist.

33. Koordinatenmeßmaschine nach Anspruch 32, **dadurch gekennzeichnet, daß** der Drehtisch (40) nur eine begrenzte Anzahl möglicher Drehstellungen besitzt, wobei der kleinstmögliche Winkelschritt von der Größenordnung des möglichen Schwenkbereiches des den Tastkopf (6) tragenden Körpers (4) um die Drehtischachse (F) ist.

## Claims

1. A coordinate measuring machine having a receiving means for a workpiece (8) to be measured,
a movable tracer head (6) for tracing the workpiece (8), said tracer head being arranged on an extension arm (5) of a substantially rigid body (4) in fixed, exchangeably fixed or movable manner,
a positioning mechanism (2) for the tracer head (6), which is intended for positioning the tracer head (6) relative to the workpiece receiving means,
and also a supply, control and evaluating device, the positioning mechanism (2) comprising at least three legs (2a, 2b, 2c, 2d, 2e, 2f), which are mounted at at least three fixed points (A, B, C) on a base plate (1) such that they are capable of polydirectional swivelling, have a measurably adjustable length and/or inclination with respect to the base plate (1), and are secured by their other ends to the body (4) supporting the tracer head (6), such that they are capable of polydirectional swivelling,
**characterised in that** the receiving means for the workpiece (8) to be measured is arranged on the base plate (1) such that it is outside the space occupied by the legs (2a, 2b, 2c, 2d, 2e, 2f).

2. A coordinate measuring machine according to Claim 1, **characterised in that** the positioning mechanism at the same time serves as a measuring device.

3. A coordinate measuring machine according to Claim 1, **characterised in that** the positioning mechanism has at least six legs (2a to 2f) which have an adjustable length and support the body (4).

4. A coordinate measuring machine according to Claim 3, **characterised in that** three leg pairs (2a, 2b; 2c, 2d; 2e, 2f) are coupled to the base plate (1) such that the coupling points of each leg pair (2a, 2b; 2c, 2d; 2e, 2f) are located in adjacent regions (A', B', C') on the base plate and, in regions (A", B", C") on the displaceable body (4) supporting the tracer head (6), the pivotal centre of one leg of each pair is arranged adjacent to the pivotal centre of one leg of an adjacent pair.

5. A coordinate measuring machine according to Claim 1, **characterised in that** the body (4) supported by the legs (2a to 2f) comprises a frame (35a, 35b, 35c).

6. A coordinate measuring machine according to Claim 5, **characterised in that** the frame (35a, 35b, 35c) is constructed in a triangle shape and the pivotal-centre regions (A", B", C") of the legs are located at the corner points of the frame.

7. A coordinate measuring machine according to Claim 6, **characterised in that** the extension arm (5) is provided at one corner of the frame (35a, 35b, 35c).

8. A coordinate measuring machine according to Claim 7, **characterised in that** the extension arm (5) points away from the frame (35a, 35b, 35c).

9. A coordinate measuring machine according to Claim 1, **characterised in that** the base plate (1) is identical with the workpiece receiving means.

10. A coordinate measuring machine according to Claim 9, **characterised in that** the base plate (1) is a multi-part construction.

11. A coordinate measuring machine according to Claim 1, **characterised in that** the base plate (1) is arranged on damping elements (9).

12. A coordinate measuring machine according to Claim 1, **characterised in that** the base plate (1) is inherently rigid and is constructed to be insensitive to temperature influences.

13. A coordinate measuring machine according to Claim 1, **characterised in that** the coordinate measuring machine has sensors which detect the position of the coupling points (A', B', C') of the legs on the base plate (1) and inform the measuring and control device of changes in the position of these coupling points.

14. A coordinate measuring machine according to Claim 1, **characterised in that** the coupling means of the legs (2a to 2f) on the base plate (1) and on the body (4) comprise low-friction, ball-and-socket joints without play.

15. A coordinate measuring machine according to Claim 14, **characterised in that** the ball-and-socket joints are constructed as air bearings, hydraulic bearings, slide or roller bearings or the like.

16. A coordinate measuring machine according to Claim 1, **characterised in that** the coupling means of the legs (2a to 2f) are formed by bending elements.

17. A coordinate measuring machine according to Claim 1, **characterised in that** the coupling means comprise air bearings, hydraulic bearings, slide or roller bearings or the like, and also bending elements.

18. A coordinate measuring machine according to Claim 1, **characterised in that** the base plate (1), the legs (2a to 2f) and the body (4) supporting the tracer head (6) are arranged in a housing (7) from which the extension arm (5) supporting the tracer head (6) projects.

19. A coordinate measuring machine according to Claim 1, **characterised in that** the legs (2a to 2f) are of an identical construction.

20. A coordinate measuring machine according to Claim 1, **characterised in that** the length of the legs (2a to 2f) is longitudinally adjustable by hydraulic or pneumatic means or by an electric motor with the aid of a spindle, a linear motor or the like.

21. A coordinate measuring machine according to Claim 1, **characterised in that** each longitudinally adjustable leg supports a scale system (31, 32) off which the length of the leg can be read or measured with reference to the coupling points on the base plate (1) and on the body (4).

22. A coordinate measuring machine according to Claim 1, **characterised in that** the legs (2a to 2f) support sensors detecting the extension length.

23. A coordinate measuring machine according to Claim 1, **characterised in that** angular position measuring systems are provided at the coupling points of the legs (2a to 2f) on the base plate (1) and/or the body (4), said angular position measuring systems detecting the angle of inclination of the legs (2a to 2f) relative to the base plate (1) or the body (4).

24. A coordinate measuring machine according to Claim 1, **characterised in that** the legs (2a to 2f) support load and/or temperature sensors.

25. A coordinate measuring machine according to Claim 1, **characterised in that** an additional measuring system, which is independent of the legs, is provided for detecting the position of the body (4) supporting the tracer head (6) or the tracer head (6) itself.

26. A coordinate measuring machine according to Claim 1, **characterised in that** at least one leg has a length which, in its starting condition, differs from that of the other legs.

27. A coordinate measuring machine according to Claim 1, **characterised in that** at least one of the legs (2a to 2f) has an unalterable predetermined length and/or position.

28. A coordinate measuring machine according to Claim 1, **characterised in that** the coupling points of the ball-and-socket joints are displaceably constructed on the base plate (1).

29. A coordinate measuring machine according to Claim 1, **characterised in that** the base plate (1) comprises a plurality of mutually rigidly connected parts located at an angle to one another, and **in that** each of the parts supports at least one of the legs (2a to 2f).

30. A coordinate measuring machine according to Claim 1, **characterised in that** the legs (2a to 2f) are arranged in pairs such that their directions in a marked part of the measuring volume form a virtually orthogonal system.

31. A coordinate measuring machine according to Claim 1, **characterised in that**, to improve the measuring accuracy, it is possible for an overriding mathematical correction of the length measurement of the legs (2a to 2f), and, if necessary, further geometrical deviations in the measured values, to be carried out in the control device, and **in that** the extent of the individual corrections of the deviations of the individual elements, such as the legs (2a to 2f) and/or the extension arm (5), is determined on a special workpiece in the measuring operation.

32. A coordinate measuring machine according to Claim 1, **characterised in that** the receiving means for the workpiece to be measured is constructed as a rotary table (40).

33. A coordinate measuring machine according to Claim 32, **characterised in that** the rotary table (40) has only a limited number of possible rotational positions, the smallest possible angular increment being of the order of the possible swivelling range of the body (4) about the axis (f) of the rotary table, said body supporting the tracer head (6).

## Revendications

1. Machine de mesure de coordonnées comprenant un porte-pièces destiné à recevoir la pièce à mesurer (8), une tête de balayage (6) mobile, qui est destinée à palper la pièce (8) et qui est montée de manière fixe, de manière amovible fixe ou de manière mobile contre un bras (5) d'un corps (4) sensiblement rigide, un mécanisme de positionnement (2) pour la tête de balayage (6), destiné à positionner la tête de balayage (6) par rapport au porte-pièces, ainsi qu'une unité d'alimentation, de commande et d'analyse, sachant que le mécanisme de positionnement (2) est formé par au moins trois jambes (2a, 2b, 2c, 2d, 2e, 2f) montées sur une plaque de base (1) de manière à pouvoir pivoter dans tous les sens contre au moins trois points (A, B, C), prévus de manière fixe, la longueur desdites jambes et/ou leur inclinaison par rapport à la plaque de base (1) étant réglable de manière mesurable et lesdites jambes étant fixées par leurs autres extrémités, de manière à pouvoir pivoter dans tous les sens, contre le corps (4) supportant la tête de balayage (6), **caractérisée en ce que** le porte-pièces destiné à recevoir la pièce à mesurer (8) est disposé en dehors de l'espace occupé par les jambes (2a, 2b, 2c, 2d, 2e, 2f) sur la plaque de base (1).

2. Machine de mesure de coordonnées selon la revendication 1, **caractérisée en ce que** le mécanisme de positionnement est conçu en même temps comme instrument de mesure.

3. Machine de mesure de coordonnées selon la revendication 1, **caractérisée en ce que** le mécanisme de positionnement comporte au moins six jambes (2a à 2f) réglables en longueur et supportant le corps (4).

4. Machine de mesure de coordonnées selon la revendication 3, **caractérisée en ce que** trois paires de jambes (2a, 2b ; 2c, 2d ; 2e, 2f) sont articulées contre la plaque de base (1), de telle sorte que les points d'articulation de chaque paire de jambes (2a, 2b ; 2c, 2d ; 2e, 2f) sont situés dans des zones voisines (A', B', C') sur la plaque de base et le point de rotation d'une jambe, dans chaque paire de jambes, au voisinage du point de rotation d'une jambe de la paire contiguë, est disposé contre le corps (4) déplaçable, supportant la tête de balayage (6), dans des zones (A'', B'', C'').

5. Machine de mesure de coordonnées selon la revendication 1, **caractérisée en ce que** le corps (4) supporté par les jambes (2a à 2f) est formé par un cadre (35a, 35b, 35c).

6. Machine de mesure de coordonnées selon la revendication 5, **caractérisée en ce que** le cadre (35a, 35b, 35c) est conçu en forme de triangle et les zones (A'', B'', C'') du point de rotation des jambes sont situées dans les angles du cadre.

7. Machine de mesure de coordonnées selon la revendication 6, **caractérisée en ce que** le bras (5) est prévu dans un angle du cadre (35a, 35b, 35c).

8. Machine de mesure de coordonnées selon la revendication 7, **caractérisée en ce que** le bras (5) est orienté en s'écartant du cadre (35a, 35b, 35c).

9. Machine de mesure de coordonnées selon la revendication 1, **caractérisée en ce que** la plaque de base (1) est identique au porte-pièces.

10. Machine de mesure de coordonnées selon la revendication 9, **caractérisée en ce que** la plaque de base (1) est formée par plusieurs parties.

11. Machine de mesure de coordonnées selon la revendication 1, **caractérisée en ce que** la plaque de base (1) est disposée sur des amortisseurs (9).

12. Machine de mesure de coordonnées selon la revendication 1, **caractérisée en ce que** la plaque de base (1) est rigide en elle-même et insensible aux influences thermiques.

13. Machine de mesure de coordonnées selon la revendication 1, **caractérisée en ce que** ladite machine de mesure de coordonnées comporte des capteurs, qui enregistrent la position des points d'articulation (A', B', C') des jambes sur la plaque de base (1) et signalent des variations de position de ces points d'articulation à l'unité de mesure et de commande.

14. Machine de mesure de coordonnées selon la revendication 1, **caractérisée en ce que** les moyens d'articulation des jambes (2a à 2f) sur la plaque de base (1) et contre le corps (4) sont formés par des joints à rotule à faible frottement et sans jeu.

15. Machine de mesure de coordonnées selon la revendication 14, **caractérisée en ce que** les joints à rotule sont conçus sous forme de coussinets d'air, de coussinets hydrauliques, de paliers lisses ou de paliers à roulement à billes ou des éléments analogues.

16. Machine de mesure de coordonnées selon la revendication 1, **caractérisée en ce que** les moyens d'articulation des jambes (2a à 2f) sont formés par des éléments de flexion.

17. Machine de mesure de coordonnées selon la revendication 1, **caractérisée en ce que** les moyens d'articulation sont formés non seulement par des coussinets d'air, des coussinets hydrauliques, des paliers lisses ou des paliers à roulement à billes ou des éléments analogues, mais aussi par des éléments de flexion.

18. Machine de mesure de coordonnées selon la revendication 1, **caractérisée en ce que** la plaque de base (1), les jambes (2a à 2f) et le corps (4) supportant la tête de balayage (6) sont disposés dans un boîtier (7), à travers lequel le bras (5) portant la tête de mesure (6) s'engage vers l'extérieur.

19. Machine de mesure de coordonnées selon la revendication 1, **caractérisée en ce que** les jambes (2a à 2f) sont conçues selon un mode de construction identique.

20. Machine de mesure de coordonnées selon la revendication 1, **caractérisée en ce que** la longueur des jambes (2a à 2f) est réglable par voie hydraulique, pneumatique ou électromotrice au moyen d'une broche, d'un moteur linéaire ou d'un élément analogue.

21. Machine de mesure de coordonnées selon la revendication 1, **caractérisée en ce que** chaque jambe réglable en longueur porte un système à échelle graduée (31, 32), qui permet de lire ou de palper la longueur de la jambe par rapport aux points d'articulation sur la plaque de base (1) et contre le corps (4).

22. Machine de mesure de coordonnées selon la revendication 1, **caractérisée en ce que** les jambes (2a à 2f) portent les capteurs enregistrant la longueur extraite.

23. Machine de mesure de coordonnées selon la revendication 1, **caractérisée en ce que** sur les points d'articulation des jambes (2a à 2f) contre la plaque de base (1) et/ou contre le corps (4) sont prévus des systèmes de mesure angulaire, qui enregistrent l'angle d'inclinaison des jambes (2a à 2f) par rapport à la plaque de base (1) ou au corps (4).

24. Machine de mesure de coordonnées selon la revendication 1, **caractérisée en ce que** les jambes (2a à 2f) portent des capteurs de charge et/ou des capteurs de température.

25. Machine de mesure de coordonnées selon la revendication 1, **caractérisée en ce qu'**il est prévu un système de mesure supplémentaire, indépendant des jambes, pour mesurer la position du corps (4) supportant la tête de balayage (6) ou de la tête de balayage (6) elle-même.

26. Machine de mesure de coordonnées selon la revendication 1, **caractérisée en ce qu'**au moins une jambe, dans sa position de départ, a une longueur différente de celle des autres jambes.

27. Machine de mesure de coordonnées selon la revendication 1, **caractérisée en ce qu'**au moins l'une des jambes (2a à 2f) a une longueur et/ou une position prédéfinies invariables.

28. Machine de mesure de coordonnées selon la revendication 1, **caractérisée en ce que** les points d'articulation des joints à rotule sont conçus de manière à pouvoir être décalés sur la plaque de base (1).

29. Machine de mesure de coordonnées selon la revendication 1, **caractérisée en ce que** la plaque de base (1) est formée par plusieurs pièces assemblées entre elles de manière rigide en formant un angle donné les unes par rapport aux autres, et **en ce que** chacune des pièces porte au moins une des jambes (2a à 2f).

30. Machine de mesure de coordonnées selon la revendication 1, **caractérisée en ce que** les jambes (2a à 2f) sont agencées par paires, de telle sorte que leurs orientations forment pratiquement un système orthogonal dans une partie définie du volume de mesure.

31. Machine de mesure de coordonnées selon la revendication 1, **caractérisée en ce que**, pour augmenter la précision de mesure, une correction exécutée par calcul dans l'unité de commande peut être superposée à la mesure de la longueur des jambes (2a à 2f) et, le cas échéant, à d'autres écarts géométriques des valeurs de mesure, et **en ce que** le calcul de la valeur de chaque correction des écarts est effectué sur chaque élément, tel que les jambes (2a à 2f) et/ou le bras (5) pendant le processus de mesure sur une pièce spécifique.

32. Machine de mesure de coordonnées selon la revendication 1, **caractérisée en ce que** le porte-pièces destiné à recevoir la pièce à mesurer est conçu sous forme de table rotative (40).

33. Machine de mesure de coordonnées selon la revendication 32, **caractérisée en ce que** la table rotative (40) ne possède qu'un nombre limité de positions de rotation possibles, le plus petit pas angulaire possible étant de l'ordre de grandeur du domaine de pivotement possible du corps (4), supportant la tête de balayage (6), autour de l'axe (F) de la table rotative.
